# EUROPEAN PATENT SPECIFICATION

(11) **EP 3 553 219 B1**
(45) Date of publication and mention of the grant of the patent: **10.03.2021**
(21) Application number: 18166463.2
(22) Date of filing: 10.04.2018
(51) Int. Cl.: D06F 39/00, C02F 1/32, C02F 1/48, C02F 1/50, C02F 1/78, D06F 35/00, D06F 39/08

(54) **DEVICE FOR WASHING MACHINE**
VORRICHTUNG FÜR WASCHMASCHINE
DISPOSITIF DE MACHINE A LAVER

(43) Date of publication of application: 16.10.2019
(73) Proprietor: Interdonato, Orazio, 98049 Villafranca Tirrena (Messina) (IT)
(72) Inventor: Interdonato, Orazio, 98049 Villafranca Tirrena (Messina) (IT)
(74) Representative: Lunati & Mazzoni S.r.L.

(56) References cited:
- EP-A1- 2 728 056
- JP-A- 2008 136 752
- US-A1- 2005 252 538
- US-A1- 2006 163 135

## Description

The present invention relates to a device for washing machine of the type specified in the preamble of the first claim.

In particular, the present invention relates to a device for a washing machine available outside the washing machine itself.

Similar devices are described in patent applications US-A-2006163135 and EP-A-2728056.

Conventional washing machines are known in the current state of the art.

As known, washing machines are provided with outward connections substantially characterized by at least three essential elements. In particular, these essential elements are defined by an electrical connection for the powering of the washing machine, a hydraulic outlet connection, which allows the discharge from the washing machine, and at least one hydraulic inlet connection, which allows the loading of the washing machine.

Furthermore, different types of washing machines are known, the main ones of which can be divided into single-inlet washing machines and dual-inlet washing machines.

The single-inlet washing machines comprise a single hydraulic inlet connection and therefore recover cold water from the hydraulic network and place it inside the washing machine. Considering that for most washes the characteristic temperatures are at least over 40°, the washing machine must be provided with devices suitable to heat the water coming from the hydraulic network.

The devices in use are generally electrical resistors placed inside the washing machine, which by Joule effect transfer heat to the fluid.

Alternatively, the single-inlet washing machine can be connected to an intake provided with a mixing valve, which allows already-heated water to be introduced into the washing machine.

On the other hand, dual-inlet washing machines are characterized by having two hydraulic inlets, each dedicated to water at a different temperature. In particular, the inlets are divided into cold water and hot water inlets.

Washing machines of the latter type are therefore characterized by having internal devices and thermostats suitable to dose the quantity of hot and cold water in order to reach the optimal washing temperatures.

Moreover, all conventional washing machines require chemical additives to be added to the water coming from the hydraulic network for the washing of the various garments.

These chemical additives substantially consist of common washing powders/liquids or chemical substances used to remove stains from and wash the fabrics to be washed inside the washing machine.

The described prior art has a few major drawbacks.

In particular, the chemical additives necessary to clean at best the garments subjected to washing are often harmful to the fabric and lead to ageing and weakening of the same, and after a series of washes, even to a change in the consistency to the touch that makes the fabric uncomfortable, for example on the skin of a user.

Over the years, this disadvantageous situation can further give rise to tearing and fraying of the weave of the fabrics included in the washed garments.

Another important drawback consists in the fact that these chemical additives have a null or limited action in sanitizing the garments. The garments, before being placed in the washing machine, are often accumulated in baskets where germs and bacteria can proliferate undisturbed, therefore the known technique, for example for washing at low temperatures, does not allow an optimal sanitization of the garments. In conclusion, the prior art has the further disadvantage of requiring, for intense washings, high operating temperatures, which, especially in the case of single-inlet washing machines, result in a considerable expenditure of electrical energy with a consequent increase in washing costs.

In this context, the technical task underlying the present invention is to devise a device for a washing machine, which is capable of substantially obviating at least some of the above-mentioned drawbacks.

Within the scope of said technical task, a major object of the invention is to obtain a device for a washing machine, which allows a considerable reduction in the use of chemical additives in traditional washing machines.

As a consequence, another major object of the invention is to provide a device, which is suitable to reduce the wear and tear of fabrics of clothing caused by washing in a washing machine.

A further object of the invention is to devise a device, which, in addition to cleaning or washing, is capable of sanitizing the fabrics inside the washing machine.

Finally, another task of the invention is to devise a device for a washing machine, which is suitable to enhance the washing intensity regardless of the temperature of the water entering the washing machine. This with the further purpose of reducing the inlet fluid temperatures, with consequent savings in energy and economic terms. The technical task and the specified objects are achieved by means of the device as claimed in the appended claim 1. Preferred embodiments are described in the dependent claims.

The features and advantages of the invention will be apparent from the detailed description of preferred embodiments of the invention, with reference to the accompanying drawings, in which:

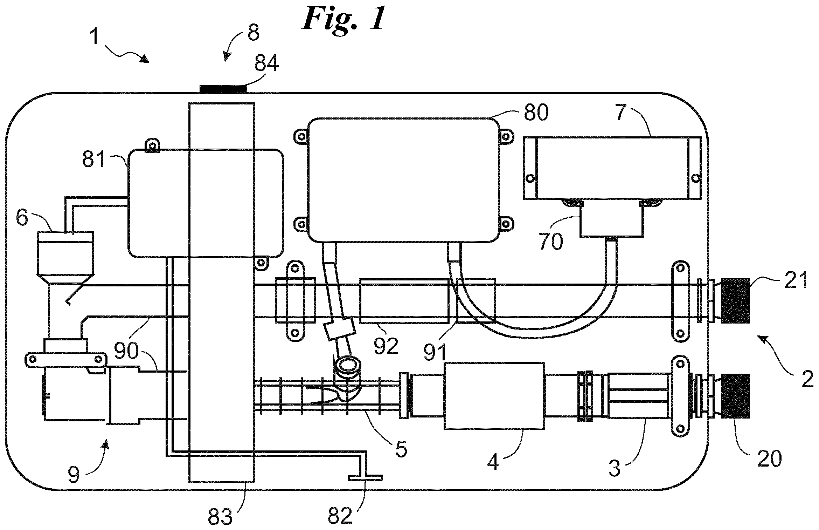

**Fig. 1** shows a functional diagram of the device for washing machines.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, measure, shape, or geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

With reference to the Figures, the device for washing machines according to the invention is indicated as a whole by the numeral **1**.

The device 1 for washing machines preferably comprises connectors **2**, a first component **3**, a second component **4**, a mixing portion **5**, a first probe **6,** a third component **7** and a control system **8**.

Moreover, the device 1 comprises a set of fittings **9** suitable to connect the device components to each other.

These fittings 9 are hydraulic connection elements and therefore preferably comprise pipes, for example metal or polymer pipes of different shapes and dimensions, suitable for allowing the determination of a hermetically sealed hydraulic circuit.

The fittings 9 can therefore be rectilinear or angular pipes or U-shaped elements or pipes comprising bifurcations, provided that they ensure the correct flow of fluids therein and provided that they ensure a functional fluidic through connection between the connected elements.

The connectors 2 comprise at least one inlet connector **20** and one outlet connector **21**.

The inlet connector 20, for example, is a connecting member suitable to be constrained to a hydraulic-type pipe, therefore it can have a threaded portion suitable to adhere hermetically to a free end of a hydraulic network pipe, for example of the home-automation type.

In particular, the inlet connector 20 is suitable to introduce fluid **10** inside the device 1.

This fluid 10 is therefore preferably water of the type circulating within the domestic hydraulic networks. In particular, the fluid 10 is cold water.

On the other hand, the outlet connector 21, for example, is a connecting member suitable to be constrained to a hydraulic inlet of a washing machine, for example of the traditional type, therefore it can have a threaded portion suitable to adhere hermetically to a free end of a hydraulic network pipe, for example of the type present in washing machines.

In particular, the outlet connector 21 is suitable to allow the outflow of treated fluid **11** from the device 1.

This treated fluid 11, therefore, preferably consists of the water that has flowed through the hydraulic circuit defined by the device 1 and hence, for example, water enriched with ozone or irradiated with UV rays or enriched with silver ions, or it comprises only some of or all the considered enrichments or irradiations.

The first component 3, for example, is arranged in fluidic through connection with the inlet connector 20 and is preferably a flow switch.

The connection may be direct or it can occur via the fittings 9.

This flow switch is substantially a hydraulic switch of the known type suitable to control the flow rate of the inlet fluid 10 and the pressure of the fluid 10 entering the device 1.

The pressure of the fluid 10 entering the device preferably ranges from 3 bar to 7 bar.

The first component 3 is thus preferably placed in fluidic through connection with the second component 4. This connection may be direct or it can occur via the fittings 9.

The second component 4 is preferably a magnetizer. The magnetizer is an apparatus that generates a magnetic field, for example suitable to vary the orientation of the inlet fluid molecules 10 coming from the first component 3. The magnetization can occur by means of a permanent magnet or a magnetic field generated by an electrical circuit.

The second component 4 is then in fluidic through connection with the mixing portion 5.

In this case too, the fluidic through connection can occur through direct connection of the components or through the aid of fittings 9.

The mixing portion 5 is preferably a Venturi-type tube known in the current state of the art.

In particular, the mixing portion thus comprises a dual input channel and an output channel. The input channel connected to the second component 4 is a channel preferably intended for the passage of a liquid-type fluid, while the input channel arranged at the central narrowing present in the Venturi-type tube is preferably intended for the introduction of a gas-type fluid inside the mixing portion 5, and in particular is in fluidic through connection with the third component 7.

The third component 7 is a gas generator. This gas generator, for example, can be of the type known in the current state of the art for the production of ozone.

Furthermore, the third component 7 and the mixing portion 5 are preferably placed in fluidic through connection via fittings 9 that comprise, for example, a connection with the control system 8.

In particular, part of the control system 8 is interposed between the third component 7 and the mixing portion 5 so as to actuate the introduction of gas into the fluid 10.

In particular, the gas introduced into the fluid 10 by means of the mixing portion 5 is preferably ozone and the treated fluid 11 is therefore ozonated fluid.

Preferably, the ozone is mixed with the fluid 10 at concentrations ranging from 0.5 to 1 mg/L.

In particular, the part of the control system 8 interposed between the third component 7 and the mixing portion 5, for example, consists of the first control means **80**. Said first control means can for example comprise an electronic board connected to an automatic control system or connected to a push-button panel, which can be activated by a user outside the device, thus allowing the manual control thereof.

Said first control means 80 allow the adjustment of the flow of gas introduced into the fluid 10. Therefore, the fluid 10, once it has come into contact with the gas coming from the third component 7, can become treated fluid 11, or the fluid 10, when it passes through the mixing portion 5, can still flow out as untreated fluid 10.

The mixing portion 5 is then, for example, in fluidic through connection with the outlet connector 21.

The fluidic through connection between the mixing portion 5 and the outlet connector 21 preferably occurs via fittings 9, and in particular via an outlet fitting **90**.

The outlet fitting 90 is of a type similar to the fittings 9, but may comprise auxiliary elements.

The outlet fitting 90 comprises the first probe 6.

This first probe 6 is preferably a silver ion probe of the type known in the current state of the art. This silver ion probe is for example suitable for the introduction of silver nano-particles into the fluid 10 or the treated fluid 11. These nano-particles, in particular, generate antibacterial and antimycotic effects on the enriched fluid 10, 11.

The first probe 6 can thus enrich the fluid 10, 11 with silver ions, but may also not perform the described function. In fact, the first probe is connected to the control system 8, and in particular to second control means **81**.

The second control means 81, in particular, are suitable to adjust the operation of the first probe 6 through its partial or complete limitation.

In addition, the control system 8 comprises a second probe **82**.

Preferably, the second control means 81 are preferably operatively connected to the second probe 82.

The second probe 82, for example a flooding sensor, is preferably suitable to detect any undesirable fluid leaks 10, 11 inside the device 1 and is operatively connected to the second control means 81.

The second control means 81 can also consist of an electronic board, which can be controlled by means of an automatic electronic system or manually by a user.

The outlet fitting 90 also comprises one or more first auxiliary portions **91**.

The first auxiliary portions 91 are arranged inside the outlet fitting 90 and consist of UV or UV LED lamps.

In particular, they are mercury vapour lamps with a quartz sheath.

The first auxiliary portions 91 are therefore suitable to irradiate the fluid 10, 11 passing in the vicinity of the first auxiliary portion 91.

These auxiliary portions can be electronically connected to the control system 8, and in particular are preferably connected to the first control means 80.

Furthermore, the first auxiliary components 91 are operatively connected to the third component 7. The third component 7 also comprises a pump **70** in fluidic through connection with the first auxiliary portions 91 and suitable to allow a gas, namely drying air, to flow towards the first auxiliary portions 91 so as to allow its correct operation.

The outlet fitting 90 may additionally comprise a second auxiliary portion **92**. This second auxiliary portion 92 is preferably a mixing valve, for example, again suitable to mix the fluid 10, 11 with the gas produced by the third component 7, or to mix the fluid 10, 11 with the silver ions from the first probe 6.

Lastly, the control means 8 can comprise a visual system **83** and controls **84**.

This visual system 83, for example, is a display operatively connected to the control system 8 and therefore to the first control means 80 and the second control means 81. This display is preferably suitable to allow a user to view information related to the operation of the device 1.

In particular, a user can do so for example by means of a push-button panel or, more generally, of controls 84.

These controls 84 preferably allow the selection of the types of treatment for the fluid 10 entering the device, as well as, for example, the concentration of the gas to be introduced into the fluid 10. The visual system 83 then informs the user about the status of the device 1 and also informs the user of any failure of the system, which can be detected by means of the second probe 82.

The operation of the device 1, previously described in structural terms, is as follows. The device draws water from the domestic hydraulic network by means of the inlet connector 20 fluidically connected to the network. The fluid 10 enters the fittings 9 and the various components of the device 1.

According to the commands imparted by the user, for example by means of the controls 84, the fluid 10 is treated inside the device 1 and flows out of the outlet connector 21 as treated fluid 11.

The treated fluid 11 can be ozonized, or enriched with silver ions or irradiated with UV rays or can be treated by combining the different treatments.

The treated fluid 11 is then introduced into a washing machine, which uses the treated fluid 11 for washing the fabrics fed by the user inside the washing machine. The device 1 according to the invention achieves important advantages.

In fact, the device 1 allows the use of chemical additives inside traditional washing machines to be considerably reduced.

In fact, the single or synergistic effect of the types of treatment achievable with the device 1 make the treated fluid 11 suitable to aid the cleaning of the fabrics, while ensuring an excellent level of sanitization.

Ozone's strong oxidizing power allows the water molecule to oxidize and inactivate many organic (phenols, benzene, trihalomethanes, pesticides) and inorganic (cyanides, sulphites, nitrites) compounds. Ozone is also able to oxidize iron, manganese and other minerals, which especially if complexed, can be very difficult to remove.

Moreover, UV-C rays are physical disinfectants with a wide range of action (bacteria, viruses, protozoa, spores). They penetrate into microorganisms reaching the nucleic acids (DNA, RNA) and inhibiting the replication ability, which results in their death. Lastly, silver, in the form of colloidal nano-particles, disrupts the enzymatic metabolic cycle of bacteria and hence their reproduction.

This technology, by releasing silver ions into the water, allows action on a wide variety of bacteria, including E. coli and Staphylococcus aureus, creating a sterilizing protection coating and an additional antibacterial effect on the fabrics.

These effects allow a washing machine that uses the device 1 to carry out washing cycles with less washing powder/liquid and at lower temperatures.

For these reasons, the wearing out of clothing fabrics caused by washing in the washing machine is greatly reduced.

The washing and sanitizing fluid generated by the device 1, thanks to the effects enhanced by the treatments, allows the temperatures of the fluid entering the washing machine to be reduced, with consequent savings in energy and economic terms.

The invention is susceptible of variations falling within the scope of the inventive concept as defined by the claims.

In this context, all details are replaceable by equivalent elements and the materials, shapes and dimensions may be any materials, shapes and dimensions.

## Claims

1. Device (1) for a washing machine comprising:
- connectors (2) including:
- an inlet connector (20) suitable to introduce fluid (10) inside said device (1),
- an outlet connector (21) suitable to allow the outflow of treated fluid (11) from said device (1),
- a first component (3) comprising a flow switch,
- a mixing portion (5) in fluidic through connection with said first component (3),
- fittings (9) comprising at least one outlet fitting (90),
- a third component (7) in fluidic through connection with said mixing portion (5) and including a gas generator generating at least ozone,
- said outlet fitting (90) being in fluidic through connection between said mixing portion (5) and said outlet connector (21),
- said mixing portion (5) being suitable to mix said fluid (10) with a gas generated by said third component (7) said gas being ozone,
- said outlet fitting (90) comprises at least a first probe (6) configured to enrich said fluid (10) or said treated fluid (11) with silver ions and at least a first auxiliary portion (91) being arranged inside the outlet fitting (90), consisting of UV or UV LED lamps, and being configured to irradiate said fluid (10) or said treated fluid (11) with UV rays,
- said first auxiliary portion (91) is separated from said mixing portion (5), so that the treated fluid (11) can be at least ozonized or enriched with silver ions or irradiated with UV rays or can be treated by combining the different treatments,
wherein said device (1) is **characterized in that**
- said third component (7) comprises a pump (70) in fluidic through connection with said first auxiliary portion (91) and suitable to allow an auxiliary gas to flow towards said first auxiliary portion (91), said auxiliary gas being drying air.

2. Device (1) according to claim 1, comprising a second component (4) in fluidic through connection with said first component (3) and said mixing portion (5), said second component (4) being a magnetizer able to magnetize said fluid (10).

3. Device (1) according to at least one of the preceding claims, comprising a control system (8) comprising first control means (80) and second control means (81), said first control means (80) being operatively connected to and suitable to control said first probe (6), and said second control means (81) being operatively connected to and suitable to control said third component (7) and said at least one auxiliary portion (91).

4. Device (1) according to claim 3, wherein said control system (8) comprises a second probe (82), said second probe (82) being operatively connected to said second control means (81) and being a flooding sensor.

5. Device (1) according to at least claim 3 or 4, wherein said control system (8) comprises a visual system (83) and controls (84), said visual system (83) being a display suitable to allow a user to view information about said device (1), and said controls (84) allowing the selection of the type of treatment for said fluid (10).

6. Device (1) according to claim 1, wherein said ozone is mixed with said fluid (10) in said mixing portion (5) at concentrations ranging from 0.5 to 1 mg/L.

7. Device (1) according to at least one of the preceding claims, wherein said fluid (10) is introduced into said device (1) at pressures ranging from 3 bar to 7 bar.

8. Device (1) according to at least one of the preceding claims, wherein said first auxiliary portion (91) comprises a mercury vapour UV lamp with a quartz sheath.

9. Device (1) according to at least one of the preceding claims, wherein saic outlet fitting (90) comprises a second auxiliary portion (92), said second auxiliary portion (92) being a mixing valve suitable to mix the fluid (10, 11) with said gas generated by said gas generator of said third component (7) or with said silver ions from said first probe (6).

## Patentansprüche

1. Vorrichtung (1) für Waschmaschine, umfassend:
- Anschlüsse (2), enthaltend:
- einen Einlassanschluss (20), der geeignet ist, Fluid (10) in die genannte Vorrichtung (1) zu leiten,
- einen Auslassanschluss (21), der geeignet ist, den Ablauf des von der genannten Vorrichtung (1) behandelten Fluids (11) zu gestatten,
- ein erstes Bauelement (3), das einen Strömungswächter umfasst,
- einen Mischabschnitt (5) in Fluidverbindung mit dem genannten ersten Bauelement (3),
- Fittings (9), die mindestens ein Auslassfitting (90) umfassen,
- ein drittes Bauelement (7) in Fluidverbindung mit dem genannten Mischabschnitt (5), das einen Gaserzeuger einschließt, der mindestens Ozon erzeugt,
- wobei dieses Auslassfitting (90) sich in Fluidverbindung zwischen dem genannten Mischabschnitt (5) und dem genannten Auslassanschluss (21) befindet,
- wobei der genannte Mischabschnitt (5) geeignet ist, das genannte Fluid (10) mit einem von dem dritten Bauelement (7) erzeugten Gas zu mischen, wobei dieses Gas Ozon ist,
- wobei das genannte Auslassfitting (90) mindestens einen ersten Fühler (6), der dazu ausgelegt ist, das genannte Fluid (10) oder das genannte behandelte Fluid (11) mit Silberionen anzureichern, und mindestens einen ersten Nebenabschnitt (91), der im Inneren des genannten Auslassfittings (90) angeordnet ist und aus UV- oder UV-LED-Lampen besteht und darauf ausgelegt ist, das genannte Fluid (10) oder das genannte behandelte Fluid (11) mit UV-Strahlen zu bestrahlen, umfasst,
- wobei der genannte erste Nebenabschnitt (91) von dem genannten Mischabschnitt (5) getrennt ist, so dass das genannte behandelte Fluid (11) mindestens ozonisiert oder mit Silberionen angereichert oder mit UV-Strahlen bestrahlt und behandelt werden kann und so die verschiedenen Behandlungen kombiniert werden,
wobei die Vorrichtung (1) **dadurch gekennzeichnet ist, dass**
- das genannte dritte Bauelement (7) eine Pumpe (70) in Fluidverbindung mit dem genannten ersten Nebenabschnitt (91) umfasst, die geeignet ist, es einem Hilfsgas zu gestatten, in den genannten Nebenabschnitt (91) zu fließen, wobei das genannte Hilfsgas Trocknungsluft ist.

2. Vorrichtung (1) nach Anspruch 1, umfassend ein zweites Bauelement (4) in Fluidverbindung mit dem genannten ersten Bauelement (3) und dem genannten Mischabschnitt (5), wobei das genannte zweite Bauelement (4) ein Magnetisierer ist, der geeignet ist, das genannte Fluid (10) zu magnetisieren.

3. Vorrichtung (1) nach mindestens einem der vorangegangenen Ansprüche, umfassend ein erste Steuerelemente (80) und zweite Steuerelemente (81) umfassendes Steuersystem (8), wobei die ersten Steuerelemente (80) operativ miteinander verbunden und geeignet sind, den genannten ersten Fühler (6) zu steuern, und die genannten zweiten Steuerelemente (81) operativ miteinander verbunden und geeignet sind, das genannte dritte Bauelement (7) und den genannten mindestens einen Nebenabschnitt (91) zu steuern.

4. Vorrichtung (1) nach Anspruch 3, bei der das genannte Steuersystem (8) einen zweiten Fühler (82) umfasst, wobei der genannte zweite Fühler (82) operativ mit den genannten zweiten Steuerelementen (81) verbunden und ein Überflutungssensor ist.

5. Vorrichtung (1) nach mindestens Anspruch 3 oder 4, bei der das genannte Steuersystem (8) ein Sichtsystem (83) und Steuerungen (84) umfasst, wobei das genannte Sichtsystem (83) ein Display und geeignet ist, es einem Benutzer zu gestatten, Informationen einzublenden, wobei die genannte Vorrichtung (1) und die genannten Steuerungen (84) es gestatten, die Art der Behandlung für das genannte Fluid (10) zu wählen.

6. Vorrichtung (1) nach Anspruch 1, bei der das genannte Ozon mit dem genannten Fluid (10) in dem genannten Mischabschnitt (5) in Konzentrationen zwischen 0,5 und 1 mg/L gemischt wird.

7. Vorrichtung (1) nach mindestens einem der vorangegangenen Ansprüche, bei der das genannte Fluid (10) in die genannte Vorrichtung (1) bei Drücken zwischen 3 bar und 7 bar eingeleitet wird.

8. Vorrichtung (1) nach mindestens einem der vorangegangenen Ansprüche, bei der der genannte erste Nebenabschnitt (91) eine UV-Lampe mit Quecksilberdämpfen und Quarzüberzug umfasst.

9. Vorrichtung (1) nach mindestens einem der vorangegangenen Ansprüche, bei der der genannte Auslassanschluss (90) einen zweiten Nebenabschnitt (92) umfasst, wobei der genannte zweite Nebenabschnitt (92) ein Mischer und geeignet ist, das Fluid (10, 11) mit dem genannten von dem genannten Gaserzeuger des genannten dritten Bauelements (7) erzeugten Gas oder mit den genannten von dem genannten ersten Fühler (6) kommenden Silberionen zu mischen.

## Revendications

1. Dispositif (1) d'une machine à laver comprenant :
- des connecteurs (2) comprenant :
- un connecteur d'entrée (20) destiné à introduire un fluide (10) dans ledit dispositif (1),
- un connecteur de sortie (21) destiné à permettre l'évacuation de fluide traité (11) dudit dispositif (1),
- un premier composant (3) comprenant un fluxostat,
- une partie de mélange (5) en connexion de passage fluide avec ledit premier composant (3),
- des raccords (9) comprenant au moins un raccord de sortie (90),
- un troisième composant (7) en connexion de passage fluide avec ladite partie de mélange (5) et comportant un générateur de gaz générant au moins de l'ozone,
- ledit raccord de sortie (90) étant en connexion de passage fluide entre ladite partie de mélange (5) et ledit connecteur de sortie (21),
- ladite partie de mélange (5) étant destinée au mélange dudit fluide (10) avec un gaz généré par ledit troisième composant (7), ledit gaz étant de l'ozone.
- ledit raccord de sortie (90) comprend au moins une première sonde (6) configurée pour enrichir ledit fluide (10) ou ledit fluide traité (11) avec des ions d'argent et au moins une première partie auxiliaire (91) étant disposée à l'intérieur dudit raccord de sortie (90), composée de lampes UV ou LED UV, et étant configurée pour irradier ledit fluide (10) ou ledit fluide traité (11) avec des rayons UV,
- ladite première partie auxiliaire (91) est séparée par ladite partie de mélange (5), de manière à ce que ledit fluide traité (11) peut être au moins ozonisé ou enrichi avec des ions d'argent ou irradié avec des rayons UV ou peut être traité en combinant les différents traitements,
où le dispositif (1) est **caractérisé en ce que**
- ledit troisième composant (7) comprend une pompe (70) en connexion de passage fluide avec ladite première partie auxiliaire (91) et destinée à permettre à un gaz auxiliaire de confluer vers ladite première partie auxiliaire (91), ledit gaz auxiliaire étant de l'air de séchage.

2. Dispositif (1) selon la revendication 1, comprenant un deuxième composant (4) en connexion de passage fluide avec ledit premier composant (3) et ladite partie de mélange (5), ledit deuxième composant (4) étant un magnétiseur destiné à magnétiser ledit fluide (10).

3. Dispositif (1) selon au moins une revendication précédente, comprenant un système de commande (8) comprenant des premiers moyens de commande (80) et des seconds moyens de commande (81), lesdits premiers moyens de commande (80) étant fonctionnellement reliés et destinés à commander ladite première sonde (6) et lesdits seconds moyens de commande (81) étant fonctionnellement reliés et destinés à commander ledit troisième composant (7) et ladite au moins une partie auxiliaire (91).

4. Dispositif (1) selon la revendication 3, où ledit système de commande (8) comprend une seconde sonde (82), ladite seconde sonde (82) étant fonctionnellement reliée auxdits seconds moyens de commande (81) et étant un capteur d'inondation.

5. Dispositif (1) selon au moins la revendication 3 ou 4, où ledit système de commande (8) comprend un système visuel (83) et des commandes (84), ledit système visuel (83) étant un display destiné à permettre à un utilisateur de voir des informations dudit dispositif (1) et lesdites commandes (84) permettant de sélectionner le type de traitement pour ledit fluide (10).

6. Dispositif (1) selon la revendication 1, où ledit ozone est mélangé avec ledit fluide (10) dans ladite partie de mélange (5) avec des concentrations comprises entre 0,5 et 1 mg/L.

7. Dispositif (1) selon au moins une revendication précédente, où ledit fluide (10) est introduit dans ledit dispositif (1) avec des pressions comprises entre 3 bars et 7 bars.

8. Dispositif (1) selon au moins une revendication précédente, où ladite première partie auxiliaire (91) comprend une lampe UV à vapeur de mercure avec une gaine en quartz.

9. Dispositif (1) selon au moins une revendication précédente, où ledit raccord de sortie (90) comprend une seconde partie auxiliaire (92), ladite seconde partie auxiliaire (92) étant un mélangeur destiné à mélanger le fluide (10, 11) avec ledit gaz généré par ledit générateur de gaz dudit troisième composant (7) ou avec lesdits ions d'argent provenant de ladite première sonde (6).
